(19) Europäisches Patentamt
European Patent Office
Office européen des brevets

(11) Publication number: 0 187 275
A2

# (12) EUROPEAN PATENT APPLICATION

(21) Application number: 85115544.0

(22) Date of filing: 06.12.85

(51) Int. Cl.[4]: C 08 F 8/30
C 08 F 8/44, C 08 F 220/56
//(C08F220/56, 220:60)

(30) Priority: 21.12.84 US 684756

(43) Date of publication of application:
16.07.86 Bulletin 86/29

(84) Designated Contracting States:
CH DE FR GB IT LI SE

(71) Applicant: ALLIED CORPORATION
Columbia Road and Park Avenue P.O. Box 2245R (Law Dept.)
Morristown New Jersey 07960(US)

(72) Inventor: Chiang, William Gong-Jeann
c/o Allied Corporation P.O. Box 2245R
Morristown New Jersey 07960(US)

(72) Inventor: Tichenor, George Jonathan Wade
c/o Allied Corporation P.O. Box 2245R
Morristown New Jersey 07960(US)

(74) Representative: Baillie, Iain Cameron et al,
c/o Langner Parry Isartorplatz 5
D-8000 München 2(DE)

## (54) Novel graft polyacrylamide copolymers and processes for their preparation and use.

(57) Novel graft polyacrylamide copolymers are provided by reaction of high molecular weight polyacrylamide with an alkyl epoxide compound such as glycidyldimethylamine or glycidyltrimethylammonium salt to form a grafted polymeric unit to form the respective polymeric units of acrylamido-2-hydroxylpropyltrimethylamine or acrylamido-2-hydroxyl-propyltrimethyl ammonium salt. A process for making the graft copolymers is provided in which the reaction is carried out while maintaining the reaction mixture in gel form. A process for removing solids from water by flocculation using the graft copolymers is also provided.



Croydon Printing Company Ltd.

DESCRIPTION

# NOVEL GRAFT POLYACRYLAMIDE COPOLYMERS AND PROCESSES FOR THEIR PREPARATION AND USE

## Background of the Invention

This invention relates to cationic, water soluble, polyacrylamide graft copolymers and process for making them. The copolymers are useful for treatment of waste water to separate efficiently the waste from the water.

## Description of the Prior Art

There is a high and increasing demand for high molecular weight, cationic polyelectrolytes for water treatment, especially for treatment of waste water. There are available certain such high molecular weight polyelectrolytes. For example, high molecular weight polyacrylamide has been modified by grafting processes to provide cationic polyelectrolyte polymers which are said to be useful for water treatment. For example, in U.S. Patent No. 3,707,465, there is disclosed grafted polyacrylamide polymers in which high molecular weight polyacrylamide is said to be grafted by oxyamination using base catalysis. Relatively low level of grafting was obtained according to the patent (not more than 20 percent grafting). It is indicated in the prior art that the effectiveness of the oxyaminated polyacrylamides in the flocculation water purification process is dependent upon the pH of the waste water (preferably a pH between 6 and 4.3) and the presence of a water soluble inorganic coagulant such as alum. It has been noted that the structure of the oxyaminated polyacrylamide polymers of that prior art was not disclosed but has been found to be based upon experimental data, anamphoteric terpolymer comprising acrylamide units, acrylic acid units, and acrylate ester quaternary units having the following structural formula if the epoxide reactant used is trimethylammonium-2,3-epoxypropane chloride (glycidyltrimethylammonium chloride), Col. 3, lines 60-64, of U.S. Patent 3,707,465:

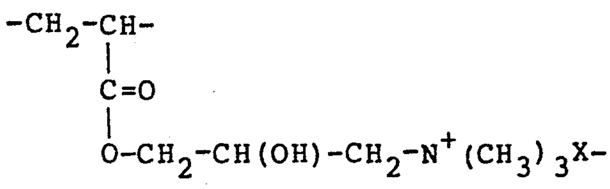

wherein X is an acid ion such as halide, nitrate or sulfate.

It is desired to provide polyelectrolyte polymers which are effective over a broad range of pH in the water to be treated and are substantially free of unwanted terpolymeric units. It is desired to provide processes which enable high degree of grafting and improved water treatment to remove unwanted waste.

## Summary of the Invention

This invention relates to cationic, water soluble, high molecular weight polymers comprising the following polymeric units randomly distributed in the copolymer chain:

A-

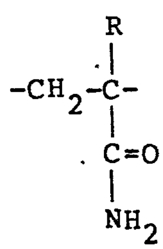

wherein R is hydrogen or methyl; and

B-

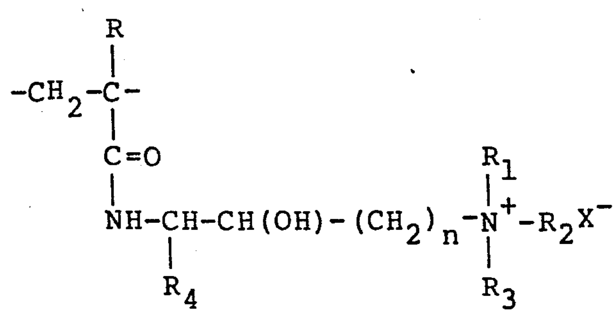

or

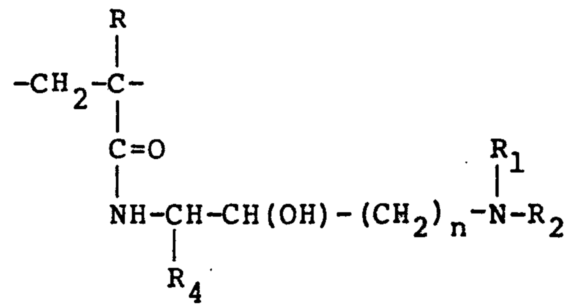

wherein R is hydrogen or methyl; $R_1$, $R_2$, and $R_3$, are alkyl groups having from 1 to 8 carbon atoms; $R_4$ is selected from the group consisting of hydrogen and alkyl groups having 1 to 3 carbon atoms; "n" is an integer of 1 to 4; the total of "n" and the number of carbon atoms in $R_4$ not to exceed four; and X is an anion of a strong acid or hydroxyl ion; the percentage of "A" units being up to about 99 mol percent and the percentage of "B" polymer units being at least about 1 mol percent. Preferably, $R_4$ is hydrogen. Also, it is preferred that "n" is one. It is further preferred that R is hydrogen.

The presently most preferred B polymer unit is acrylamido-2-hydroxypropyltrimethyl ammonium salt. It is desired that the mol percent of B polymer units be at least about 10 mol percent. It is preferred for some uses that the mol percentage of B polymer units be greater than 20 mol percent and more preferred in the range of at least 25 to 50. For other uses, it is preferred that the mol percentage be in the range of 1 to about 10 and more preferred in the range of about 1.5 to about 5. Copolymers for some other uses will have other preferred ranges.

The X is an anion of a strong acid and is suitably halide, such as chloride, nitrate, sulfate, bisulfate or perchlorate.

The polyacrylamide used to make the copolymers of this invention has a high molecular weight, desirably at least one million molecular weight, and preferably having a molecular weight of at least two million, such as in the range of two to ten million or greater, and most preferably having a molecular weight of at least

about 5 million. The polyacrylamide desirably is nonionic, free of units other than acrylamide which interfere with the desired properties.

The process of this invention which can be used to make the copolymers of this invention comprises carrying out the grafting reaction in the gel state by swelling a mixture of a polymer having pendant amide groups such as solid polyacrylamide and a suitable alkyl epoxide compound with a solvent mixture. Preferably, the epoxide compound is a glycidyltrimethylammonium salt, such as halide, nitrate, sulfate, or the like. Other appropriate epoxide compounds can be used instead to provide copolymers having grafts of the above formulas.

The solvent mixture comprising water and an organic solvent which is water miscible and is a solvent for the epoxide grafting compound. Suitable organic solvent/water solvent mixtures are alcohol/water and dimethylsulfoxide/water combinations. The ratio of organic solvent to water can vary. Generally, 1:1 ratio by volume is suitable. The amount of the solvent combination used generally is from about 20 to about 50 percent by weight based on the total reaction mixture weight, a preferred amount being about 35 percent. The polyacrylamide reaction gel is made by swelling polyacrylamide in fine particle form (suitably passing a 60 mesh screen) with the solvent combination having the desired epoxide compound dissolved therein. The amount of epoxide compound used depends upon the amount of grafting desired. The reaction mixture is placed into a suitable reactor such as a stainless steel bomb and is preferably heated to achieve high degree of grafting. The reaction temperature is suitably between about 50°C to about 120°C, preferably between about 80°C to about 100°C. The reaction time suitably is between about 2 to about 80 hours, depending upon reaction temperature and degree of grafting desired.

Upon completion of the reaction, the grafted copolymer reaction mixture, which remains as a swollen,

rubbery mass, is washed thoroughly with a suitable solvent such as methanol to remove unreacted epoxide compound and unwanted by-products. The remaining copolymer if desired can be further purified by dissolving in water and precipitating from the aqueous solution. The copolymer product is dried and pulverized to a suitable size for use.

The copolymers of this invention are highly charged polyelectrolytes useful in solid-liquid separation processes. Copolymers of this invention are especially useful in the dewatering of sewage sludge and treatment of other commercial process sludges such as refinery, chemical process, and paper and pulp sludges. They can be used effectively in other flocculation and filtration processes. Also, copolymers of this invention are useful in the treatment of paper and other fibrous materials.

## Detailed Description of the Invention and the PreferredEmbodiments

This invention relates to cationic, water soluble, high molecular weight polymers comprising the following polymeric units randomly distributed in the copolymer chain:

A-

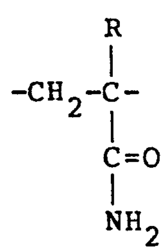

wherein R is hydrogen or methyl; and

B-

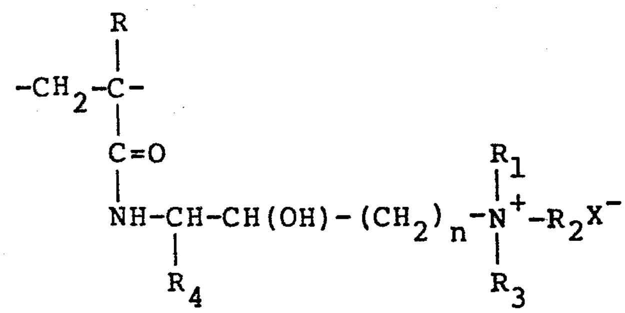

or

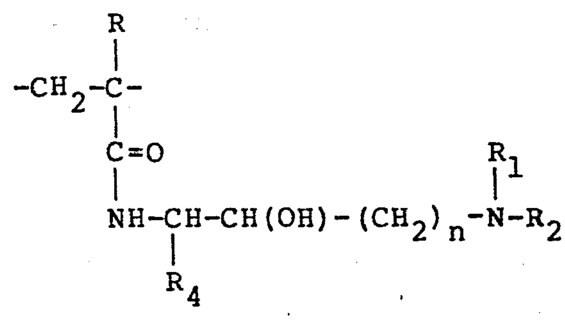

wherein R is hydrogen or methy; $R_1$, $R_2$ and $R_3$ are alkyl groups having 1 to 8 carbon atoms, $R_4$ is selected from the group consisting of hydrogen and alkyl groups consisting of hydrogen and alkyl groups having 1 to 3 carbon atoms; "n" is an integer of 1 to 4; the total of "n" and the number of carbon atoms in $R_4$ not to exceed four; and X is an anion of a strong acid of hydroxyl ion; the percentage of "A" units being up to about 99 mol percent and the percentage of "B" polymer units being at least about 1 mol percent. Preferably, $R_4$ is hydrogen. Also, it is preferred that "n" is one. It is further preferred that R is hydrogen.

The presently most preferred B polymer unit is acrylamido-2-hydroxypropyltrimethyl ammonium salt. It is desired that the mol percent of B polymer units be at least about 10 mol percent. It is preferred for some uses that the mol percentage of B polymer units be greater than 20 mol percent and more preferred to be in the range of at least 25 to 50. For other uses, it is preferred that the mol percentage be in the range of 1 to about 10 and more preferred in the range of about 1.5 to about 5. Copolymers with other preferred ranges will

be selected for other uses.

X is an anion of a strong acid and is suitably halide, such as chloride, or nitrate, sulfate, bisulfate or perchlorate.

The copolymers of this invention are suitably made using high molecular weight polyacrylamide by following the process of this invention. The polyacrylamide used to make the copolymers of this invention have a high molecular weight, desireably at least two million, such as in the range of two to ten million or greater, and most preferably having a molecular weight of at least about 5 million. The polyacrylamide desirably is nonionic, free of units other than acrylamide which interfere with the desired properties.

In the determination of molecular weight of the polyacrylamide, it has been found reliable to use intrinsic viscosity measurement.

Suitable polyacrylamide polymers are commercially available. Polyacrylamide polymers can be made by generally conventional polymerization procedures such as emulsion polymerization procedures. Suitable catalysts for the emulsion polymerization are azo catalysts such as 2,2'-azobis(2,4-dimethyl valeronitrite), ammonium persulfate, and the like or redox initiator systems such as illustrated in U.S. Patent 3,707,465. A particularly preferred method of making polyacrylamide is disclosed in copending Application Serial No. 638,916, filed August 8, 1984. Part or all of the acrylamide units can be methyl substituted acrylamide, or methacrylamide, so long as the desired flocculating and other properties are retained.

The copolymers of this invention can be made by the process of this invention, which comprises carrying out the grafting reaction in the gel state by swelling a mixture of a polymer having pendant amide groups such as solid polyacrylamide and a suitable alkyl epoxide compound with a solvent mixture. Preferably, the epoxide compound is a glycidyltrimethylammonium salt, such as

halide, nitrate, sulfate, or the like. Other appropriate epoxide compounds can be used instead to provide copolymers having grafts of the above formulas.

The solvent mixture comprises water and an organic solvent which is water miscible and is a solvent for the epoxide grafting compound. Suitable organic solvent/water solvent mixtures are alcohol/water and dimethylsulfoxide/water combinations. The alcohol in the alcohol/water mixtures can be, for example, methanol, ethanol, propanol or isopropanol. The ratio of organic solvent to water can vary. Generally, 1:1 ratio by volume is suitable. The amount of the solvent combination used generally is from about 20 to about 50 percent by weight based on the total reaction mixture weight, a preferred amount being about 35 percent. The polyacrylamide reaction gel is made by swelling polyacrylamide in fine particle form (suitably passing a 60 mesh screen) with the solvent combination having the desired epoxide compound dissolved therein, into a suitable reactor such as a stainless steel bomb and is preferably heated to achieve high degree of grafting. The reaction temperature is suitably between about 50°C to about 120°C, preferably between about 80°C to about 100°C. The reaction time suitably is between about 2 to about 80 hours, depending upon reaction temperature and degree of grafting desired.

At the higher reaction temperatures, especially using the higher concentrations of epoxide compound, some crosslinking can occur resulting in some insoluble polymeric material. This crosslinking can be minimized by increasing the ionic strength of the reaction mixture by the addition of a compatible salt. Suitable salts include organic as well as inorganic salts. Preferred salts include sodium nitrate, sodium chloride, guanidine nitrate, guanidine sulfate, and the like. A suitable amount of salt is one mol of salt per 10 mols of polymer. This can be varied to obtain optimum results in a particular reaction.

Upon completion of the reaction, the grafted copolymer reaction mixture, which remains as a swollen, rubbery mass, is washed thoroughly with a suitable solvent such as methanol to remove unreacted epoxide compound and unwanted by-products. The copolymer product can be dissolved and used directly. Alternatively, the copolymer product can be further purified by dissolving in water and precipitating from the aqueous solution. The copolymer product is dried and pulverized to a suitable size for use.

Based upon $^{13}C$-NMR, $^{15}N$-NMR, and FT-IR analyses, the desired copolymer units of acrylamide and acrylamido-2-hydroxypropyltrimethyl ammonium salt is obtained when the epoxide compound used is glycidyltrimethylammonium chloride to graft polyacrylamide.

The copolymers of this invention are highly charged polyelectrolytes useful in solid-liquid separation processes. Copolymers of this invention are especially useful in the dewatering of sewage sludge and treatment of other commercial process sludges such as refinery, chemical, and paper and pulp sludges. They can be used effectively in other flocculation and filtration processes. Also, copolymers of this invention are useful for treatment of paper and other fibrous materials.

The following Examples are illustrative of the invention. The setting forth of details in the Examples is not intended as limitations of the invention except as expressed in the appended claims.

EXAMPLE 1

An amount of 4.0 g. (0.056 mol) of pulverized polyacrylamide (Allied CLARIFLOC N103) and 15.44 g. (0.084 mol) of 83% glycidyltrimethyl ammonium chloride (GTAC) (Fluka Chemical Corporation) are weighed into a 35 ml. screw top glass vial. A quantity of 4 ml. of methanol are added to the mixture to dissolve the GTAC, then 4 ml. of water is added with stirring to swell the polyacrylamide-GTAC-methanol slurry to form a homogeneous rubbery reaction mixture. The vial is sealed and heated in a 70°C oil bath for 65 hours. The vial is then cooled to room temperature and opened cautiously. The reaction product remains as a swollen, rubbery mass, which is washed and extracted thoroughly with excess methanol to remove unreacted GTAC and other unwanted by-products. The desired acrylamide-acrylamide-2-hydroxypropyltrimethylammonium chloride copolymer product is then dissolved directly into water for use as a flocculant or for other uses. Alternatively, the product can be dried under vacuum at room temperature, and pulverized for final use. The copolymer product has a molecular weight of 5 x $10^6$.

$^{13}C$-NMR, $^{15}N$-NMR and FT-IR analyses indicate the copolymer has acrylamide and acrylamido-2-hydroxy-propyltrimethylammonium chloride polymeric units. Based on colloid titration, which is based on a measure of the charge on polymer molecules, 26 mol percent of quaternary amine is formed in the product. The polymer has the following structure:

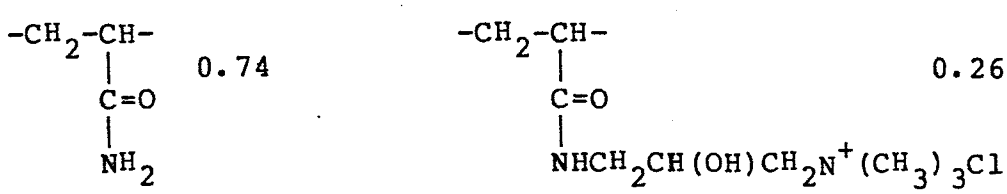

0.74 0.26

The infrared spectra of the copolymer product shows peaks at 1553 $cm^{-1}$ ($-\overset{O}{\overset{\|}{C}}-NHR$) and 1612 $cm^{-1}$ ($-\overset{O}{\overset{\|}{C}}-NH_2$). No peak at 1553 $cm^{-1}$ is found in the polyacrylamide spectra, indicating secondary amide was formed during the reaction.

$^{13}C$-NMR spectra of modified polyacrylamide has two C=O signals in the carbonyl region with chemical shifts (ppm) 180.07 (s), 178.3 (s), with additional resonances at 69.13 (s), 65.46 (s), 55 (s), 44.21 (s), 43-42 (m), and 36-34 (m).

$^{15}N$-MR spectra of modified polyacrylamide indicates

three different types of nitrogen with shemical shits (ppm) at 114.66 (secondary amide nitrogen), 111.27 (primary amide nitrogen), and 44.70 (quaternary amine nitrogen).

Colloid titration, FT-IR, $^{13}$C-NMR, and $^{15}$N-NMR spectra are consistent with the proposed structure.

EXAMPLE 2

Pulverized polyacrylamide in the amount of 3 g. (0.042 mol) (Allied CLARIFLOC NX-120) and 11.58 g. (0.063 mol) of 83% glycidyltrimethylammonium chloride (GTAC) (Fluka Chemical Corporation) are weighed into a 35 ml. screw top glass vial. A quantity of 4 ml. of methanol is added to the mixture to dissolve GTAC. To this polyacrylamide-GTAC-methanol mixture is added a solution of 0.36 g. sodium nitrate in 4 ml. water and a homogeneous rubbery mass is formed. The vial is sealed and heated in a 80°C oil bath for 16 hours. The desired acrylamide-acrylamido-2-hydroxypropyltrimethylammonium chloride copolymer is purified by the same procedure used in Example 1. The copolymer product has 38 mol percent quaternary amine as determined by colloid titration and a molecular weight of approximately 7 x $10^6$.

EXAMPLE 3

The procedure of Example 2 is followed. The homogeneous rubbery reaction mixture is sealed in a screw top glass vial and heated in a 90°C oil bath for seven hours. The product obtained has 32 mol percent quaternary amine by colloid titration, and a molecular weight of approximately 7 x $1^6$.

EXAMPLE 4

The procedure described under "EXAMPLES" in col. 3, lines 50-63 of U.S. Patent 3,707,465 is generally followed using trimethylammonium-2-3-epoxypropane chloride (glycidyltrimethylammonium chloride). Analysis ($^{13}$C-NMR) shows that a graft terpolymer is obtained

having acrylamide units (chemical shift ppm, 180), acrylic acid salt units (chemical shift ppm, 183), and ester units (chemical shift ppm, 177) of the following structure:

```
-CH2-C-
     |
     C=O
     |
     O-CH2-CH(OH)-(CH2)-N+(CH3)3Cl-
```

EXAMPLE 5

Evaluation of Copolymer as Sewage Sludge Flocculating Agent

The GTAC-modified polyacrylamide products are evaluated as conditioning aids for a sewage sludge. There are many ways to measure the effectiveness of polymers in coagulation and flocculation. The parameter which is used to evaluate and compare the copolymers of this invention is Specific Filtration Resistance (SFR). In general, the lower the SFR value, the better the floc development, and the better the floc development and filtration, and the more effective the polymer.

Using anaerobically digested sludge from the Syracuse Metro Waste Treatment Plant as substrate, a number of samples are evaluated by SFR testing. The SFR testing procedures involve treatment of a 400 ml. sample of sludge having approximately 2-5 percent solids. The appropriate polymer dosage (10-200 parts by weight per million parts of sludge) is added to the sludge sample and mixed by transferring polymer-sludge mixture from one cup to another sixteen times. The conditioned sludge is poured into a Buchner funnel fitted with a trigger cloth filter. The filtrate volume is noted at various time intervals. Normally, six polymer doses are examined for each polymer. The filtration rate (ml./min.) increases with increasing polymer dosage up to an optimum. After reaching the minimum SFR, the filtration rate decreases with increasing polymer dosage. SFR ($sec^2/g.$) is then plotted versus polymer

concentration (ppm); the closer the minimum of the curve is to the origin, the better is the polymer performance.

The following table summarizes the results comparing acrylamide-acrylamido-2-hydroxypropyltriammonium chloride copolymers of this invention with commercial Percol 757 (Allied Colloid, Inc.) The polymer dose (ppm) necessary to achieve an SFR of 1.0E6 is given.

| Copolymer Used | | Invention | |
|---|---|---|---|
| (mol.wt.) | (mol percent graft units) | Copolymers Dose (ppm) | Percol 757* Dose (ppm) |
| $7.7 \times 10^6$ | 28 | 150 | 160 |
| $7.4 \times 10^6$ | 26 | 135 | 145 |
| $7.4 \times 10^6$ | 30 | 130 | 140 |
| $7.4 \times 10^6$ | 32 | 160 | 180 |

*Percol 757 is a commercial flocculating polymer sold by Allied Colloid, Inc. It is a copolymer of acrylamide units and acryloxyethyltrimethylammonium chloride units. It has a molecular weight of approximately $7 \times 10^6$.

The data show that the copolymers of the invention as listed in the Table take less dosage than the copolymer product Percol 757 for the flocculation.

What is claimed is:

1. A cationic, water-soluble, high molecular weight copolymer comprising the following polymeric units randomly distributed in the copolymer chain:

A-

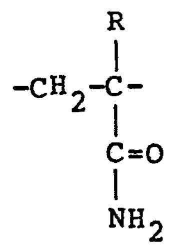

wherein R is hydrogen or methyl; and

B-

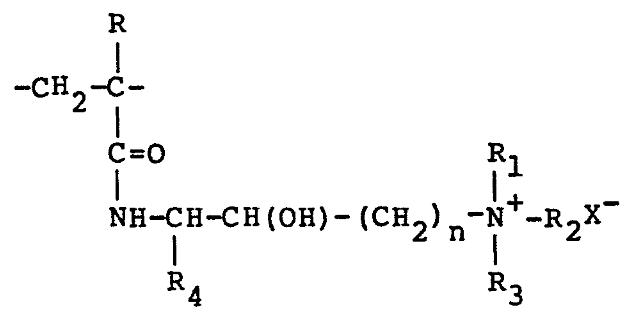

or

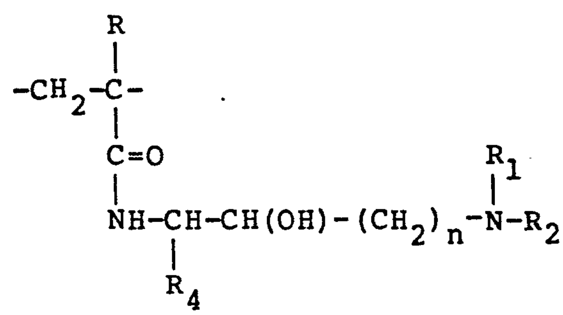

wherein R is hydrogen or methyl; $R_1$, $R_2$, and $R_3$ are alkyl groups having 1 to 8 carbon atoms; $R_4$ is selected from the group consisting of hydrogen and alkyl groups having 1 to 3 carbon atoms; "n" is an integer of 1 to 4; the total of "n" and the number of carbon atoms in $R_4$ not to exceed four; X is an anion of a strong acid or hydroxyl; the percentage of "A" units being up to 99 mol percent and the percentage of "B" units being at least 1 mol percent.

2. A copolymer as defined in claim 1 wherein R is

hydrogen or methyl.

3. A copolymer as defined in claim 1 or 2 wherein polymeric unit B is acrylamido-2-hydroxypropyltrimethyl ammonium salt.

4. A copolymer as defined in claim 1 or 2 wherein the polymeric unit B is acrylamido-2-hydroxypropyltri-methyl ammonium salt and is present in the amount of at least about 1.5 mol percent.

5. A process of removing solids from water by contacting a combination of water and solids with a flocculating effective amount of a copolymer of claim 1, 2 or 3.

6. A process of removing solids from water by contacting a combination of water and solids with a flocculating effective amount of a copolymer of claim 2 wherein the polymeric B unit is acrylamido-2-hydroxypropyltrimethyl ammonium salt.

7. A process for grafting a polymer containing pendant amide groups by:

(1) forming a reaction mixture of said polymer with an alkyl epoxide compound to form graft on said amide groups, said graft represented by the following formulas:

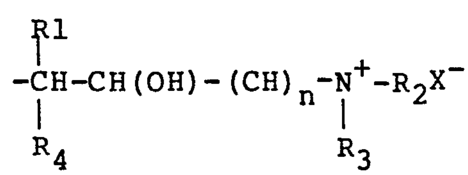

or

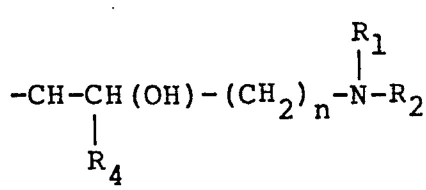

wherein $R_1$, $R_2$, and $R_3$ are alkyl groups having 1 to 8 25 carbon atoms; $R_4$ is selected from the group consisting

of hydrogen and alkyl groups having 1 to 3 carbon atoms; "n" is an integer of 1 to 4; the total of "n" and the number of carbon atoms in $R_4$ not to exceed four; X is an anion of stong acid of hydroxyl;

(2) swelling said polymer reaction mixture with a combination of water and water miscible organic solvent which is a solvent for said alkyl epoxide compound to form a reaction gel; and

(3) heating said reaction gel at a reaction temperature to form said grafting.

8. A process of claim 7 in which said alkyl epoxide compound is glycidyltrialkyl ammonium salt.

9. A process of claim 8 in which said epoxy alkyl compound is glycidyltrimethyl ammonium salt and the polymer is a high molecular weight polyacrylamide.

10. A process as defined in claim 9 wherein the polyacrylamide has a molecular weight of at least five million.